# EUROPEAN PATENT APPLICATION

(11) **EP 4 621 770 A1**
(43) Date of publication of application: **24.09.2025**
(21) Application number: 25164110.6
(22) Date of filing: 17.03.2025
(51) Int. Cl.: G10L 15/22, G10L 15/183, G10L 15/18, G10L 15/16, G06F 3/16, G06N 3/045

(54) **MODIFYING SOFTWARE FUNCTIONALITY BASED ON DETERMINING UTTERANCE INTENT WITH A NATURAL LANGUAGE MODEL AND/OR IDENTIFYING OBJECTS IN AN IMAGE WITH A A NATURAL LANGUAGE MODEL OR AN IMAGE ANALYSIS MODEL**

(30) Priority: 21.03.2024 US 202418612244
(71) Applicant: Games Global Operations Limited, Douglas, Isle of Man IM1 1AE (GB)
(72) Inventor: PETERS, Leslie Craig, 3610 KwaZula-Natal (ZA)
(74) Representative: D Young & Co LLP

(57) **Abstract**

An implementation may involve: receiving audio input that contains utterances; determining, by a speech-to-text engine that receives the audio input, a textual representation of the utterances; providing, to a natural language model, a request to determine an intent of the textual representation of the utterances, wherein the request indicates that the intent is to be selected from a plurality of predefined intents; receiving, from the natural language model, the intent; determining, based on the intent, an action; and based on the action, modifying operation of a software application.

## Description

### BACKGROUND

Software application functionality can be modified based on various types of inputs, such as inputs from a computing device, a machine, a sensor, or an internal state change related to the software (e.g., expiry of a timer). Software application functionality can also be modified based on various types of explicit input, such as textual data (e.g., received by way of a keyboard), pointer data (e.g., received by way of a pointing device such as a mouse), touch data (e.g., received by way of a screen or other interface with touch sensitivity), voice data (e.g., received by way of a microphone), visual input (received by way of a camera), and so on. Explicit input is typically provided by users.

However, there are types of implicit input that may be received, by a computing device operating the software application, through one or more of these modalities (e.g., microphone and/or camera). This implicit input might be environmental noises, environmental images, user utterances, user facial expressions, and so on. Implicit input may provide a software application with highly relevant information about what the software application can do to meet the needs of an environment or a user. However, current software applications are not equipped to process such implicit input and/or are unable to interpret such input in an accurate, efficient, and meaningful fashion.

As a result, current software applications may require complex sequences of explicit input to modify their functionality in a particular manner or to achieve a particular goal. Such sequences result in more computational resources (e.g., processor, memory, and/or network capacity) being required for input and output processing, and there still is no guarantee that explicit input can represent the same context or perform the same functions as implicit input.

### SUMMARY

Particular aspects are set out in the appended independent claims. Various optional embodiments are set out in the dependent claims. The embodiments herein provide technical improvements to these and potentially other technical problems by employing various types of machine learning models to determine the semantic meaning of implicit input. These models may include natural language processing (NLP) models, such as textual or multi-model large language models (LLMs). Other types of trained image processing, sound processing, and/or textual processing models could be used in a similar fashion. The determined sematic meaning of one or more units of implicit input may then be used to modify the functionality of a software application. Such a modification may include navigating through a menu of the software application, launching a feature of the software application, changing the processing of an algorithm employed by the software application, and so on.

Doing so in this manner can be used to offload the processing and memory requirements from client devices and/or application-specific software on server devices onto remote computing platforms that can more readily be scaled to efficiently operate machine learning models. Doing so also results in the software application performing in a more accurate fashion - for instance, the software application may be able to obtain an interpretation of the intent of user input that reduces errors and/or misunderstandings thereof.

Accordingly, a first example embodiment may involve receiving audio input that contains utterances; determining, by a speech-to-text engine that receives the audio input, a textual representation of the utterances; providing, to a natural language model, a request to determine an intent of the textual representation of the utterances, wherein the request indicates that the intent is to be selected from a plurality of predefined intents; receiving, from the natural language model, the intent; determining, based on the intent, an action; and, based on the action, modifying operation of a software application.

In some examples, the audio input is received by way of a microphone that is positioned so that, when activated, it detects the utterances, wherein a user associated with the microphone has opted-in to sharing the audio input.

Some examples may further involve receiving a digital image; providing, to the natural language model or an image analysis model, a second request to identify objects within the digital image; and receiving, from the natural language model or the image analysis model, a list of identified objects within the digital image, wherein the action is also determined based on the identified objects.

In some examples, the second request indicates that, for any of the objects that are identified as human faces, the human faces are to be associated with one or more emotions detected therein, wherein the action is also determined based on the one or more emotions.

Some examples may further involve receiving a representation of a location, wherein the request also includes an indication of the location, and wherein the action is also determined based on the location.

Some examples may further involve receiving a representation of a sensor data, wherein the request also includes an indication of the sensor data, and wherein the action is also determined based on the sensor data.

In some examples, the natural language model comprises a neural network architecture including: a plurality of transformer layers, each layer with a self-attention mechanism and a position-wise feed-forward network, an input layer configured to receive and tokenize natural language phrases into input tokens, an embedding mechanism to map input tokens to vectors in a multi-dimensional space, and an output layer configured to transform the vectors as processed from a final transformer layer into natural language text.

Some examples may further involve providing, to a prompt pre-processor, the textual representation of the utterances; modifying, by the prompt pre-processor, the textual representation of the utterances into the natural language model prompt; and providing, to the natural language model, the natural language model prompt.

In some examples, receiving the intent comprises: receiving, from the natural language model, a natural language model response containing a representation of the intent; and parsing natural language model response to obtain the intent.

In some examples, modifying the textual representation of the utterances is based on one or more of a user profile, historical data, or application data.

In some examples, determining the action comprises searching an intent-action mapping data structure for an entry including the intent; and reading the action from the entry.

In some examples, functionality of the software application is modified to provide visual or auditory assistance to a user, display a particular user interface screen, navigate through a workflow, enable or disable a feature, or change operation of the feature.

In some examples, functionality of the software application is modified to increase or decrease speed at which the software application executes one or more particular tasks or produces one or more particular events.

A second example embodiment may involve receiving a digital image; providing, to a natural language model or an image analysis model, a request to identify objects within the digital image; receiving, from the natural language model or the image analysis model, a list of identified objects within the digital image; determining, based on the identified objects, an action; and, based on the action, modifying operation of a software application. The second example embodiment may be combined with any of the features, functionalities or aspects discussed in the context of the first example embodiment or otherwise herein.

A third example embodiment may involve a computer-readable medium, having encoded thereon program instructions that, upon execution by a computing system, cause the computing system to perform operations in accordance with of any previous embodiment.

In a fourth example embodiment, a system may include various means for carrying out each of the operations of any previous embodiment.

These, as well as other embodiments, aspects, advantages, and alternatives, will become apparent to those of ordinary skill in the art by reading the following detailed description, with reference where appropriate to the accompanying drawings. Further, this summary and other descriptions and figures provided herein are intended to illustrate embodiments by way of example only and, as such, that numerous variations are possible. For instance, structural elements and process steps can be rearranged, combined, distributed, eliminated, or otherwise changed, while remaining within the scope of the embodiments as claimed.

### BRIEF DESCRIPTION OF THE DRAWINGS

Figure 1 illustrates a schematic drawing of a computing device, in accordance with example embodiments.
Figure 2 illustrates a schematic drawing of a server device cluster, in accordance with example embodiments.
Figure 3 depicts example sources of implicit input to a software application, in accordance with example embodiments.
Figure 4 depicts an example software architecture for implicit input classification, in accordance with example embodiments.
Figure 5 depicts an example LLM interface, in accordance with example embodiments.
Figure 6 is a flow chart, in accordance with example embodiments.
Figure 7 is a flow chart, in accordance with example embodiments.

### DETAILED DESCRIPTION

Example methods, devices, and systems are described herein. It should be understood that the words "example" and "exemplary" are used herein to mean "serving as an example, instance, or illustration." Any embodiment or feature described herein as being an "example" or "exemplary" is not necessarily to be construed as preferred or advantageous over other embodiments or features unless stated as such. Thus, other embodiments can be utilized and other changes can be made without departing from the scope of the subject matter presented herein.

Accordingly, the example embodiments described herein are not meant to be limiting. It will be readily understood that the aspects of the present disclosure, as generally described herein, and illustrated in the figures, can be arranged, substituted, combined, separated, and designed in a wide variety of different configurations. For example, the separation of features into "client" and "server" components may occur in a number of ways.

Further, unless context suggests otherwise, the features illustrated in each of the figures may be used in combination with one another. Thus, the figures should be generally viewed as component aspects of one or more overall embodiments, with the understanding that not all illustrated features are necessary for each embodiment.

Additionally, any enumeration of elements, blocks, or steps in this specification or the claims is for purposes of clarity. Thus, such enumeration should not be interpreted to require or imply that these elements, blocks, or steps adhere to a particular arrangement or are carried out in a particular order.

Herein, a "software application" may be any structured set of computer-executable instructions that can to perform a specific function or a set of related functions. This encompasses programs that operate in various computing environments, including but not limited to standalone desktop applications, mobile applications, web-based applications, embedded systems software, cloud-based services, distributed computing applications, and operating systems. Software applications may involve the processing, manipulation, and management of data, control of hardware devices, execution of various algorithms, provisioning of user interfaces for interaction, and communication with other software applications or services. The term is inclusive of software that performs an array of functions, whether preinstalled, downloaded, accessed remotely, or delivered as a service. This definition is intended to cover a broad range of software implementations, architectures, and platforms, recognizing the evolving nature of technology and software development practices.

### I. Example Computing Devices and Cloud-Based Computing Environments

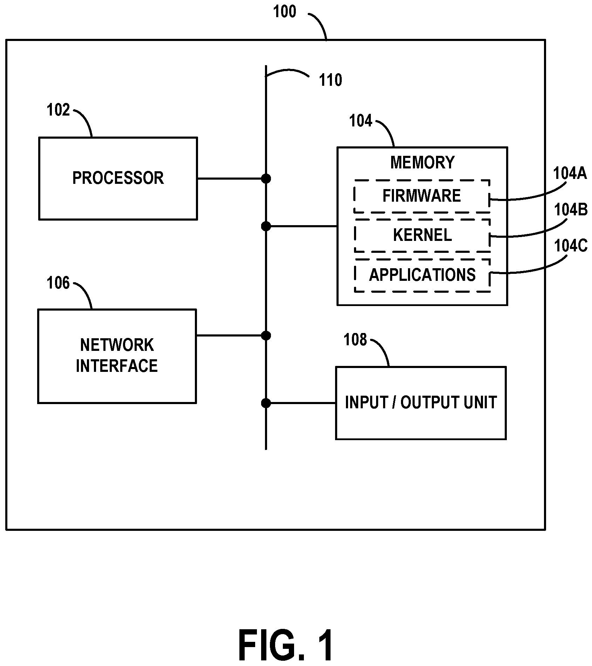

Figure 1 is a simplified block diagram of an example computing device 100, illustrating some of the components that could be included in a computing device arranged to operate in accordance with the embodiments herein. Computing device 100 could be a client device (e.g., a device actively operated by a user), a server device (e.g., a device that provides computational services to client devices), or some other type of computational platform. Some server devices may operate as client devices from time to time in order to perform particular operations, and some client devices may incorporate server features.

In this example, computing device 100 includes processor 102, memory 104, network interface 106, and input / output unit 108, all of which may be coupled by system bus 110 or a similar mechanism. In some embodiments, computing device 100 may include other components and/or peripheral devices (e.g., detachable storage, printers, and so on).

Processor 102 may be one or more of any type of computer processing element, such as a central processing unit (CPU), a co-processor (e.g., a mathematics, graphics, or encryption co-processor), a digital signal processor (DSP), a network processor, and/or a form of integrated circuit or controller that performs processor operations. In some cases, processor 102 may be one or more single-core processors. In other cases, processor 102 may be one or more multi-core processors with multiple independent processing units. Processor 102 may also include register memory for temporarily storing instructions being executed and related data, as well as cache memory for temporarily storing recently-used instructions and data.

Memory 104 may be any form of computer-usable memory, including but not limited to random access memory (RAM), read-only memory (ROM), and non-volatile memory (e.g., flash memory, hard disk drives, solid state drives, compact discs (CDs), digital video discs (DVDs), and/or tape storage). Thus, memory 104 represents both main memory units, as well as long-term storage. Other types of memory may include biological memory.

Memory 104 may store program instructions and/or data on which program instructions may operate. By way of example, memory 104 may store these program instructions on a computer-readable medium, such that the instructions are executable by processor 102 to carry out any of the methods, processes, or operations disclosed in this specification or the accompanying drawings.

As shown in Figure 1, memory 104 may include firmware 104A, kernel 104B, and/or applications 104C. Firmware 104A may be program code used to boot or otherwise initiate some or all of computing device 100. Kernel 104B may be an operating system, including modules for memory management, scheduling and management of processes, input / output, and communication. Kernel 104B may also include device drivers that allow the operating system to communicate with the hardware modules (e.g., memory units, networking interfaces, ports, and buses) of computing device 100. Applications 104C may be one or more user-space software programs, such as web browsers or email clients, as well as any software libraries used by these programs. Memory 104 may also store data used by these and other programs and applications.

Network interface 106 may take the form of one or more wireline interfaces, such as Ethernet (e.g., Fast Ethernet, Gigabit Ethernet, and so on). Network interface 106 may also support communication over one or more non-Ethernet local-area media, such as coaxial cables or power lines, or over wide-area media, such as fiber-optic connections (e.g., OC-x interfaces) or digital subscriber line (DSL) technologies. Network interface 106 may additionally take the form of one or more wireless interfaces, such as IEEE 802.11 (Wifi), Bluetooth, global positioning system (GPS), or a wide-area wireless interface (e.g., using 4G or 5G cellular networks). However, other forms of physical layer interfaces and other types of standard or proprietary communication protocols may be used over network interface 106. Furthermore, network interface 106 may comprise multiple physical interfaces. For instance, some embodiments of computing device 100 may include Ethernet, Bluetooth, and Wifi interfaces.

Input / output unit 108 may facilitate user and peripheral device interaction with computing device 100. Input / output unit 108 may include one or more types of input devices, such as a keyboard, a mouse, a touch screen, and so on. Similarly, input / output unit 108 may include one or more types of output devices, such as a screen, monitor, printer, and/or one or more light emitting diodes (LEDs). Additionally or alternatively, computing device 100 may communicate with other devices using a universal serial bus (USB) or high-definition multimedia interface (HDMI) port interface, for example.

In some embodiments, one or more computing devices like computing device 100 may be deployed as a cluster of server devices. The exact physical location, connectivity, and configuration of these computing devices may be unknown and/or unimportant to client devices. Accordingly, the computing devices may be referred to as "cloud-based" devices that may be housed at various remote data center locations.

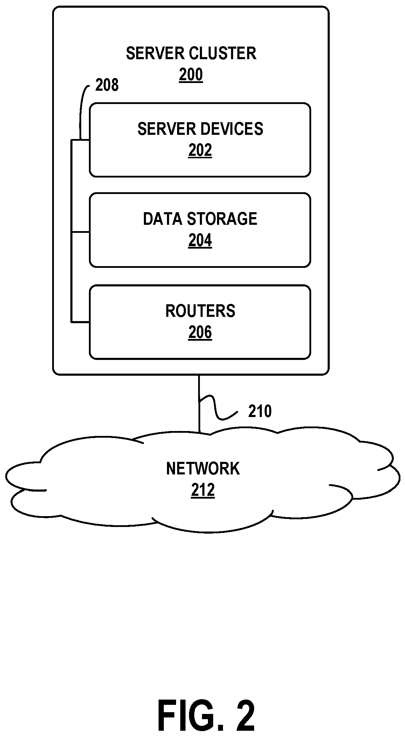

Figure 2 depicts a cloud-based server cluster 200 in accordance with example embodiments. In Figure 2, operations of a computing device (e.g., computing device 100) may be distributed between server devices 202, data storage 204, and routers 206, all of which may be connected by local cluster network 208. The number of server devices 202, data storages 204, and routers 206 in server cluster 200 may depend on the computing task(s) and/or applications assigned to server cluster 200.

For example, server devices 202 can be configured to perform various computing tasks of computing device 100. Thus, computing tasks can be distributed among one or more of server devices 202. To the extent that these computing tasks can be performed in parallel, such a distribution of tasks may reduce the total time to complete these tasks and return a result. For purposes of simplicity, both server cluster 200 and individual server devices 202 may be referred to as a "server device." This nomenclature should be understood to imply that one or more distinct server devices, data storage devices, and cluster routers may be involved in server device operations.

Data storage 204 may be data storage arrays that include drive array controllers configured to manage read and write access to groups of hard disk drives and/or solid state drives. The drive array controllers, alone or in conjunction with server devices 202, may also be configured to manage backup or redundant copies of the data stored in data storage 204 to protect against drive failures or other types of failures that prevent one or more of server devices 202 from accessing units of data storage 204. Other types of memory aside from drives may be used.

Routers 206 may include networking equipment configured to provide internal and external communications for server cluster 200. For example, routers 206 may include one or more packet-switching and/or routing devices (including switches and/or gateways) configured to provide (i) network communications between server devices 202 and data storage 204 via local cluster network 208, and/or (ii) network communications between server cluster 200 and other devices via communication link 210 to network 212.

Additionally, the configuration of routers 206 can be based at least in part on the data communication requirements of server devices 202 and data storage 204, the latency and throughput of the local cluster network 208, the latency, throughput, and cost of communication link 210, and/or other factors that may contribute to the cost, speed, fault-tolerance, resiliency, efficiency, and/or other design goals of the system architecture.

As a possible example, data storage 204 may include any form of database, such as a structured query language (SQL) database. Various types of data structures may store the information in such a database, including but not limited to tables, arrays, lists, trees, and tuples. Furthermore, any databases in data storage 204 may be monolithic or distributed across multiple physical devices.

Server devices 202 may be configured to transmit data to and receive data from data storage 204. This transmission and retrieval may take the form of SQL queries or other types of database queries, and the output of such queries, respectively. Additional text, images, video, and/or audio may be included as well. Furthermore, server devices 202 may organize the received data into web page or web application representations. Such a representation may take the form of a markup language, such as the HyperText Markup Language (HTML), the eXtensible Markup Language (XML), Cascading Style Sheets (CSS), and/or JavaScript Object Notation (JSON), or some other standardized or proprietary format. Moreover, server devices 202 may have the capability of executing various types of computerized scripting languages, such as but not limited to Perl, Python, PHP Hypertext Preprocessor (PHP), Active Server Pages (ASP), JavaScript, and so on. Computer program code written in these languages may facilitate the providing of web pages to client devices, as well as client device interaction with the web pages. Alternatively or additionally, Java may be used to facilitate generation of web pages and/or to provide web application functionality.

### II. Example Large Language Models

Various embodiments herein relating to the modification of software application activities may employ large language models (LLMs) to perform certain tasks. Doing so is advantageous because these models have capabilities that surpass previous techniques in the fields of natural language understanding, natural language generation, knowledge aggregation, information retrieval, pattern recognition, and data analysis. Thus, before describing the software modification embodiments in detail, it is helpful to consider the operation and capabilities of LLMs.

An LLM is an advanced computational model, primarily functioning within the domain of natural language processing (NLP) and machine learning. An LLM can be configured to understand, interpret, generate, and respond to human language in a manner that is both contextually relevant and syntactically coherent. The underlying structure of an LLM is typically based on a neural network architecture, more specifically, a variant of the transformer model. Transformers are notable for their ability to process sequential data, such as text, with high efficiency.

The operation of an LLM involves layers of interconnected processing units, known as neurons, which collectively form a deep neural network. This network can be trained on vast datasets comprising text from diverse sources, thereby enabling the LLM to learn a wide array of language patterns, structures, and colloquial nuances for prose, poetry, and program code. The training process involves adjusting the weights of the connections between neurons using algorithms such as backpropagation, in conjunction with optimization techniques like stochastic gradient descent, to minimize the difference between the LLM's output and expected output.

An aspect of an LLM's functionality is its use of attention mechanisms, particularly self-attention, within the transformer architecture. These mechanisms allow the model to weigh the importance of different parts of the input text differently, enabling it to focus on relevant aspects of the data when generating responses or analyzing language. The self-attention mechanism facilitates the model's ability to generate contextually relevant and coherent text by understanding the relationships and dependencies between words or tokens in a sentence (or longer parts of texts), regardless of their position.

Upon receiving an input, such as a text query or a prompt, the LLM may process this input through its multiple layers, generating a probabilistic model of the language therein. It predicts the likelihood of each word or token that might follow the given input, based on the patterns it has learned during its training. The model then generates an output, which could be a continuation of the input text, an answer to a query, or other relevant textual content, by selecting words or tokens that have the highest probability of being contextually appropriate.

Furthermore, an LLM can be fine-tuned after its initial training for specific applications or tasks. This fine-tuning process involves additional training (e.g., with reinforcement from humans), usually on a smaller, task-specific dataset, which allows the model to adapt its responses to suit particular use cases more accurately. This adaptability makes LLMs highly versatile and applicable in various domains, including but not limited to, chatbot development, content creation, language translation, and sentiment analysis.

Some LLMs are multimodal in that they can receive prompts in formats other than text and can produce outputs in formats other than text. Thus, while LLMs are predominantly designed for understanding and generating textual data, multimodal LLMs extend this functionality to include multiple data modalities, such as visual and auditory inputs, in addition to text.

A multimodal LLM can employ an advanced neural network architecture, often a variant of the transformer model that is specifically adapted to process and fuse data from different sources. This architecture integrates specialized mechanisms, such as convolutional neural networks for visual data and recurrent neural networks for audio processing, allowing the model to effectively process each modality before synthesizing a unified output.

The training of a multimodal LLM involves multimodal datasets, enabling the model to learn not only language patterns but also the correlations and interactions between different types of data. This cross-modal training results in multimodal LLMs being adept at tasks that require an understanding of complex relationships across multiple data forms, a capability that text-only LLMs do not possess. This makes multimodal LLMs particularly suited for advanced applications that necessitate a holistic understanding of multimodal information, such as chatbots that can interpret and produce images and/or audio.

### III. Example Systems and Method for Responding to Implicit Input

Input to a computing device or computing system can occur in a number of ways. Examples include inputs from another computing device (e.g., via a network), a machine (e.g., via a network or some other type of connection or interface), a sensor (e.g., a temperature sensor, a proximity sensor, a motion sensor, a light sensor, and/or a humidity sensor), or an internal state change related to a software application or computing device (e.g., timer expiry, reaching a processor usage threshold, reaching a memory usage threshold, disk activity, network traffic, and/or battery status). Other possibilities exist.

Input to a computing device or computing system also could be input from or triggered by a user. This may include textual data (e.g., received by way of a keyboard), pointer data (e.g., received by way of a pointing device such as a mouse), touch data (e.g., received by way of a screen or other interface with touch sensitivity), stylus input (e.g., received by way of drawing tool applied to a screen or other interface with touch sensitivity), voice data (e.g., received by way of a microphone), visual input (received by way of a camera), and so on. User input is typically explicit - the user is responding to a specific prompt from a software application with a specific command for the software application. In response, the software application may change its state and/or behavior in some fashion.

For example, the user entering textual input into a text box of a graphical user interface may cause the software application to write a representation of this input to a database table. Or, the user speaking a voice command to a home automation device requesting it to turn on a lamp may result in the home automation device transmitting a corresponding signal to the lamp or a smart plug to which the lamp is plugged in. Other possibilities exist.

This input can be referred to an "explicit" input. The software application receiving the input generally knows what to do with it, because the input has been provided in response to a prompt from the software application or may have a general context based on the current state of the software application and/or other data. The software application is often explicitly programmed to respond to the input with pre-established activities.

Explicit input may be limited to just a few possibilities. For example, a dialog box on a graphical user interface may only allow the user to select "yes" or "no" options. Moreover, the software application may also be configured to parse or otherwise check the input for conformance to an expected form of input (e.g., a person's age should be a non-negative integer or a date should be in year-month-day format). If the expected form is not received, the software application may reject the input, discard, the input, and/or raise an error regarding the input.

Put another way, explicit input is generally input that the software application has been specifically programmed to receive and process. The interpretation of this input is typically clear and understood by the software application. However, there are other types of input that may be difficult for a software application to interpret.

### A. Implicit Input

Various types of implicit input may be received, by a computing device operating a software application, through one or more modalities (e.g., microphone, camera, and/or another form of sensor). Here, input is "implicit" if it is incidental and/or collected without explicit action or direct instruction from a user. Such implicit input might be user utterances, user facial expressions, environmental noises, environmental images, sensor readings, and so on.

Utterances may include spoken words, spoken sentences, spoken sentence fragments, vocal sounds, and various forms of non-linguistic communication (e.g., moans, groans, shouts, etc.). Verbal utterances may be declarative, interrogative, imperative, or exclamatory. Processing of utterances as discussed herein may include consideration of paralinguistic factors, such as tone of voice, loudness, pitch, and speed of speaking.

In some cases, "implicit" input may be a command received from a user that is a general or aspirational goal, or too vague, broad, or high level to be mapped to a specific value or action. Thus, the term "implicit input" may include some types of explicit input that is vague or is subject to multiple reasonable interpretations. An example of a high-level user goal provided as implicit input might be the input of "I'd like to make my computer run faster." In other examples, "implicit" input might include input that is partially explicit and partially implicit.

Implicit input may provide a software application with highly relevant information about what the software application can do to meet the needs of a user or an environment. However, current software applications are not equipped to process such implicit input and/or are unable to interpret such input in an accurate, efficient, and meaningful fashion.

Consequently, current software applications often employ an intricate series of explicit inputs for the modification of their functionality. These sequences result in an increased demand for computational resources, including but not limited to processor capacity, memory allocation, and network bandwidth, dedicated to the processing of explicit inputs and their corresponding outputs. In other words, the user might have to interact with the software application several times to convey their intent using explicit input (if it is possible to do so at all), whereas implicit input would allow this intent to be communicated in a smaller number of interactions. Despite this increased resource commitment, the processing of one or more units of explicit input can still fail to adequately represent the context conveyed by or relevant to implicit input. Therefore, explicit input is not a sufficient mechanism to pierce the communication barrier between user and software application.

The embodiments herein provide technical improvements to these and potentially other technical problems by employing various types of machine learning models to determine the semantic meaning of implicit input. These models may include NLP models, such as textual or multi-model LLMs. Other types of trained image processing, sound processing, and/or textual processing models could be used in a similar fashion. The determined sematic meaning of one or more units of implicit input may then be used to modify the functionality of a software application. Such a modification may include navigating through a menu of the software application, launching a feature of the software application, changing the processing of an algorithm employed by the software application, and so on.

Doing so in this manner can be used to offload the processing and memory requirements from client devices and/or application-specific software on server devices onto remote computing platforms that can more readily be scaled to efficiently operate machine learning models. Doing so also results in the software application performing in a more accurate fashion - for instance, the software application may be able to obtain an interpretation of the intent of user input that reduces errors and/or misunderstandings thereof. Likewise, the software application may be able to receive implicit input from or of an environment (e.g., environmental sound, environmental images, and/or sensor data) and change its behavior based on this input.

As an example, in response to the high-level user input of "I'd like to make my computer run faster," the software application may cause a textual LLM prompt to be generated, such as "Please determine the semantic intent of this statement from a user of a computer: 'I'd like to make my computer run faster. '" This prompt may be provided to an LLM, which may utilize its training on thousands or millions of textual documents to determine one or more likely intents. In some cases, the prompt may include a finite number of possible intents from which the LLM can choose. An example of such a prompt might be "Please determine the semantic intent of this statement from a user of a computer 'I'd like to make my computer run faster.' and select the semantic intent from the list of slow performance, crashes or freezes, viruses or malware, connectivity issues, and software compatibility." Here, a well-trained LLM would almost certainly select "slow performance".

With the semantic intent determined, the software application may respond accordingly. In the example above, this may mean that the software application recommends or proactively undertakes removal of unneeded files from the computing device, deletion of unused applications from the computing device, termination of the execution of unneeded applications on the computing device, adjustment of the power settings of the computing device, scanning for malware the computing device, or retrieval of a help document for display to the user. Other possible actions can be taken.

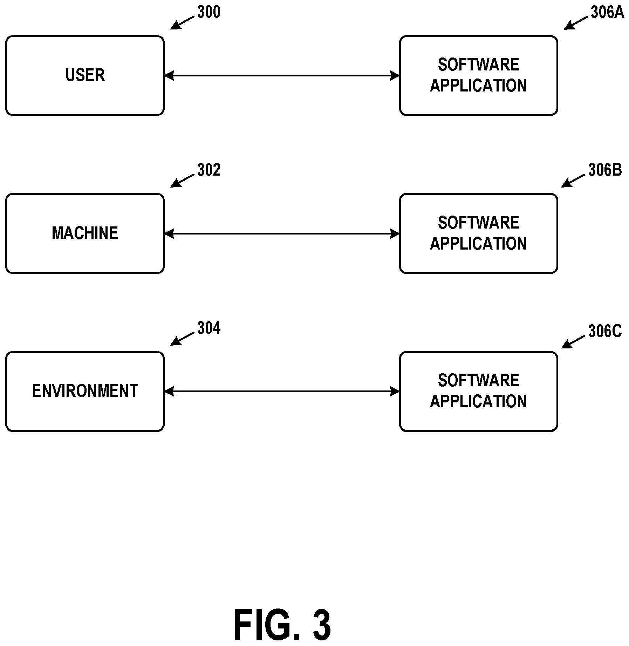

Figure 3 depicts example sources of implicit input to a software application. In these cases, the software application may be executing on a computing device local to the user (e.g., a client device) or it may be executing on a remote computing device (e.g., a server device).

For example, a user such as user 300 may provide implicit input to software application 306A. The user might interact with software application 306A while their device's microphone and/or camera are activated. Thus, both explicit visual and auditory input (e.g., gestures, facial expressions, incidental vocal comments, voice commands, and/or background noise) may be used to modify the operation of software application 306A. In these cases, the user may be required to opt-in to providing such implicit input and thus assent to their microphone and/or camera being turned on and their implicit input being used for this purpose.

In another example, a machine such as machine 302 may provide implicit input to software application 306B. The machine might be an industrial device, a component of an assembly line, factory equipment, remote farming equipment, and so on. A microphone and/or camera may be disposed within visual or auditory range of machine 302. Images and/or sounds relating to the operation of machine 302 may be used to modify the operation of software application 306B. For example, if these images and/or sounds indicate that machine 302 is not operating correctly or as expected, software application 306B may transmit one or more commands to machine 302 in an attempt to rectify the situation. Alternatively or additionally, software application 306B may notify a human operator.

In yet another example, environment 304 may provide implicit input to software application 306C. Environment 304 may be indoors or outdoors. A microphone and/or camera may be disposed within environment 306C or adjacent thereto for purposes of monitoring, security, industrial process control, agriculture, energy management, and so on. Images and/or sounds relating to environment 304 may be used to modify the operation of software application 306C. For example, if these images and/or sounds indicate that environment 304 includes an unknown or unexpected object, software application 306C may cause an alarm to sound or may alert a human agent.

In any of these scenarios, types of information other than images supplied by a camera and audio supplied by a microphone may be used. For example, video may be recorded by a camera, location may be recorded by a global positioning system (GPS) receiver, temperature may be recorded by a thermometer, weather data may be retrieved for the location, and so on. These images, sounds, locations, and/or other readings may be captured periodically (e.g., every 5, 10, 30, or 60 seconds) or from time to time. In some cases, a window of n previously-captured items may be stored for purposes of comparison with more recently-captured items (e.g., to compare an image of a user's face to another that was captured the previous day).

### B. Software Architecture for Implicit Input

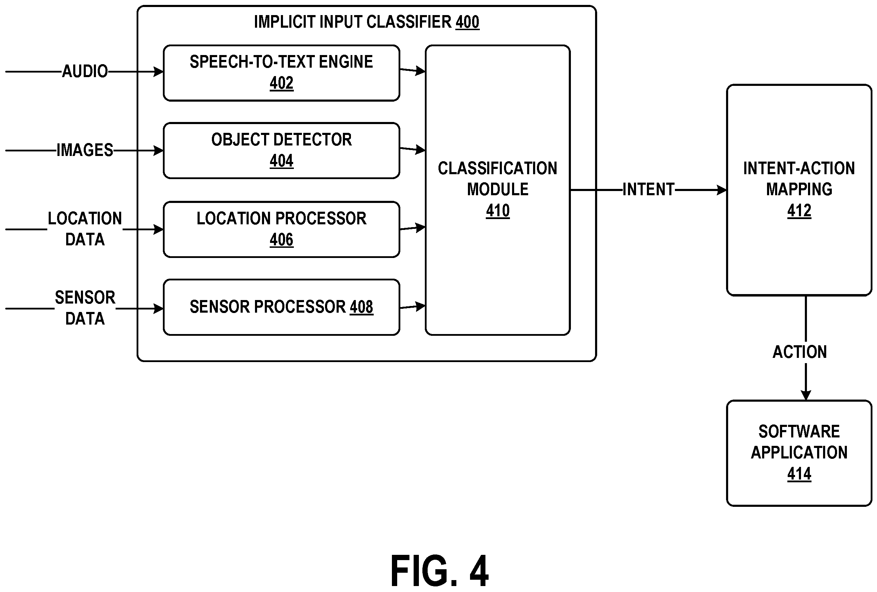

Figure 4 provides an example software architecture for implicit input classification, including implicit input classifier 400, intent-action mapping 412, and software application 414. The depicted software architecture may include one or more units of software that are capable of independent execution. In some embodiments, all of these units of software are combined into software application 414. Alternatively, these units of software may be distributed across one or more computing devices, and thus communicate with one another by way of one or more networks.

Implicit input classifier 400 may include speech-to-text engine 402, object detector 404, location processor 406, sensor processor 408, and classification module 410. Each of speech-to-text engine 402, object detector 404, location processor 406, temperature processor 408, and classification module 410 may be configured to receive and process a different type of input - audio, images, GPS data, and sensor data, respectively. In some embodiments, more or fewer of such modules may be present.

Speech-to-text engine 402 may be software that is configured to convert spoken language into textual representations thereof. Accordingly, it may receive auditory signals and employ signal decomposition to differentiate speech from ambient noise, subsequently parsing the speech into discrete phonetic parts. These phonetic parts may be processed by a machine learning module that was trained on diverse speech data encompassing a multitude of dialects and linguistic nuances. Thus, candidate utterances may be identified from the input audio. A linguistic analysis module may apply NLP to deduce the contextual meaning and syntactical structure of these candidate utterances and the transcribed speech, thereby converting them into a coherently rendered textual format. In this context, "text" is understood to mean, for example, a non-transitory representation of the speech received.

Object detector 404 may be software that is configured to analyze digital images, such as photographs, and accurately identify objects represented within them. Thus, it may include one or more image processing algorithms, possibly leveraging deep learning models such as convolutional neural networks (CNNs), capable of dissecting an image into its constituent elements to recognize patterns, shapes, textures, and colors that correspond to known objects. In doing so, object detector 404 may preprocess the image to adjust its brightness and contrast and/or normalize the image size. The preprocessed image is then fed into the deep learning model, which examines the image through multiple layers, each designed to identify increasingly complex features. The first layers may detect simple edges and colors, while deeper layers recognize more complex patterns that define specific objects. Object detector 404 may provide, as output, indications of one or more identified objects, persons, animals, faces, facial emotions, and/or hand gestures.

For example, the model may be trained on a vast dataset of labeled images, allowing it to learn the characteristics of a wide range of objects. Through this training, the model develops the capability to not only detect but also accurately identify various objects within a given image. For example, the model may be trained on dataset of facial expressions annotated with corresponding emotional states. This training enables the model to accurately recognize and classify facial expressions from the images into distinct emotions, such as happiness, sadness, anger, surprise, disgust, boredom, and fear, based on the configuration of facial muscles, the presence of specific expression markers (e.g., smile lines, furrowed brows), and overall facial geometry. The model may then calculate the likelihood of each potential emotion based on the detected facial features and expressions, and assign the most probable emotion or emotions to the individual(s) in the image.

Alternatively or additionally, the model may be trained to recognize hand gestures. Thus, it may analyze the spatial configuration of fingers in the image, the shape of the hand, and the orientation and relative positioning of the hand(s) to the body and other objects. Utilizing pattern recognition, the model may assess these factors against a learned dataset of labeled hand gestures to detect the presence of specific hand gestures in the image. Each recognized gesture is then classified according to a predefined taxonomy of gestures, which may represent commands, emotions, or other significant cues. This capability may be further enhanced by incorporating contextual analysis that evaluates other objects within the image and the interaction context of the depicted individual(s), providing a more nuanced identification of each gesture.

Location processor 406 may be software that is configured to receive and analyze location data, including but not limited to latitude and longitude coordinates, from various sources such as GPS, Wi-Fi triangulation, and/or cellular network data. It may further integrate geographic information system (GIS) data with machine learning techniques to accurately interpret and match the raw data against a comprehensive database of geographic locations and landmarks. The processed data is then assigned descriptive names, identifying specific geographic locations or landmarks represented by the input data. In some cases, this may involve looking up the location data in one or more tables and determining the names of cities, towns, regions, landmarks, and so on that are with a threshold range of points in the location data.

Sensor processor 408 may be software that is configured to receive sensor data, including but not limited to temperature, humidity, pressure, light intensity, and/or motion signals. Upon receiving such data, it may apply various algorithms to interpret and derive meaningful insights from the sensor data. For instance, when processing temperature data, the software can determine environmental conditions, such as detecting a fire in the vicinity if the temperature exceeds a predetermined threshold, or identifying the onset of a potential equipment failure in industrial settings by recognizing abnormal temperature patterns. Similarly, motion sensor data can be analyzed to detect unauthorized entry or to track the movement of objects within a specified area.

Classification model 410 may receive input from one or more of speech-to-text engine 402, object detector 404, location processor 406, and/or sensor processor 408. It may then use this input to determine an overall intent or meaning relating to what is being monitored (e.g., a person, animal, or environment). In doing so, classification model 410 may determine a most likely intent or meaning from a plurality thereof.

In some cases, this intent may be based largely or entirely on one such input. For example, input from speech-to-text engine 402 may include a verbal comment from a user (e.g., "Where are the privacy settings?") that is converted to text and then provided to classification model 410. In turn, classification model 410 may determine that the user wishes to adjust the privacy settings of software application 414 or the software application with which they are engaged.

Likewise, input from object detector 404 may indicate that a user's facial expression or other non-verbal cues exhibit one or more emotions, such as happiness, sadness, anger, surprise, fear, disgust, boredom, contempt, confusion, concentration, excitement, and/or anxiety. Such an indication may be provided to classification model 410. For instance, if input from object detector 404 indicates user confusion, classification model 410 may determine that the user's intent is to learn more about specific features of software application 414 or the software application with which they are engaged.

In other cases, classification model 410 may determine intent from one or more different modalities of input. As a further example, classification module 410 may receive input from both speech-to-text engine 402 and location processor 406. This may include a comment from the user (e.g., "How do I bin this data?") and the user's location in GPS coordinates. Here, the user's location can help determine a proper intent of the comment when it might otherwise be ambiguous or subject to different colloquial interpretations based on region. Notably, if the location data indicates that the user is in the U.K., the intent of the comment might be that the user wishes to discard the data. On the other hand, if the user is in the U.S., the same comment might indicate an intent to arrange the data into logical bins (e.g., for statistical analysis).

Once the intent of implicit input has been identified, it may be provided to intent-action mapping 412 to determine an action for software application 414 to perform. In some embodiments intent-action mapping 412 may include a table that associates intents to respective actions that software application 414 can take to respond to the implicit input in a meaningful fashion. Each software application may have a custom table governing its responses to implicit input, though some software applications could share such tables with other software applications.

**Table 1**

| **Source** | **Software App.** | **Intent** | **Action** |
|---|---|---|---|
| speech-to-text engine 402 (voice input) | Search engine | Find information about the Eiffel Tower. | Display search results related to the history, location, and visiting hours of the Eiffel Tower. |
| object detector 404 (gesture input) | Augmented reality application | Tap on living room lights. | Send command to smart lighting system to turn off lights in the living room. |
| object detector 404 (eye tracking input) | Accessibility | Ticket purchase. | Navigate to the ticket purchase interface. |
| speech-to-text engine 402 (voice input) | Contextual help | Selected tooltip icon. | Display a tooltip with contextual help. |
| object detector 404 (gesture input) | Email | Swipe left. | Archive the currently displayed email message. |
| speech-to-text engine 402 (voice input) and location processor 406 (GPS input) | Mapping and navigation | Find nearest gas station. | Use GPS location to determine the user's current position, search for nearby gas stations, and provide directions to the closest one. |
| object detector 404 (facial recognition) and sensor processor 408 (ambient light detection) | Device security | Unlock device with facial identification. | Use the ambient light sensor to detect low light conditions and trigger an increase in screen brightness or activate additional infrared sensors (if available) to provide more accurate facial recognition. |
| object detector 404 (facial recognition) | Customer service | User is angry. | Connect the user to a human agent via a voice call or chat interface. |

An example of intent-action mapping 412 appears in Table 1. For sake of brevity, only a few mappings are provided although many more are possible. For example, various intents may cause software application 414 to display contextual help or automatically navigate to a menu or other aspect of a user interface that allows the user's intent to be addressed.

Nonetheless, software applications are capable of carrying out a wide variety of actions. Some include but are not limited to: opening a file, storing recent modifications to a document, searching content, sending an email, printing a document, playing a video, pausing video playback, adjusting settings, creating a new project, logging into a local or remote service, logging out of such a service, encrypting files or other data, decrypting files or other data, uploading files, downloading files, retrieving files from a remote location, generating a report, navigating to a user interface screen, refreshing data, synchronizing data with another application, and setting an alarm. Other possibilities exist. In some cases, a series of actions may be taken in response to a determined intent.

In view of these examples, it should be clear that the embodiments herein encompass various ways of controlling software application activities based on implicit input. One or more implicit inputs may be classified into an intent, and then an action for the software application to carry out may be determined based in the intent.

In some embodiments, implicit input classifier 400 and intent-action mapping 412 may be one or more separate applications that provide actions to software application 414 in the form of messages or commands. In other embodiments, implicit input classifier 400 and intent-action mapping 412 may be integrated into software application 414.

### C. Using an LLM to Determine Intent of Implicit Input

As noted above, an LLM is an advanced NLP model that can determine the semantic content and/or interpret the semantic meaning of textual or image-based input. Given that a significant portion of implicit input is in textual or image form, an LLM may be able to assist with the determination of an intent from this implicit input. Thus, an LLM could be used to perform some or all of the functionality of implicit input classifier 400 and/or classification module 410. In some cases, the LLM may perform some or all of the functionality of speech-to-text engine 402, object detector 404, location processor 406, and/or sensor processor 408. However, naively attempting to use an LLM in this manner (e.g., where the LLM has been trained as a foundational model with only general-purpose knowledge) might not produce the desired results.

Notably, a general-purpose LLM may have been designed to perform a wide range of language understanding and generation tasks across various domains without specialization. It may have been trained on a diverse and broad dataset covering multiple fields, topics, and types of language use. This makes general-purpose LLMs versatile and capable of handling a wide array of tasks, but they may not produce domain-specific results with the desired proficiency and nuance. Therefore, it may be desirable to employ a "wrapper" around such an LLM so that intent determination from implicit input may be performed more accurately and robustly.

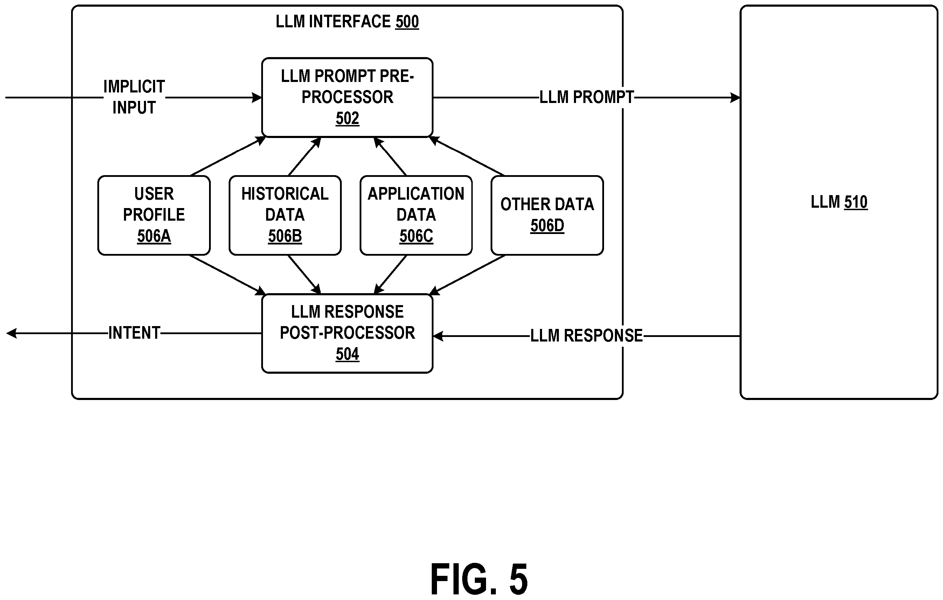

Figure 5 depicts such an architecture. LLM interface 500 may include LLM prompt pre-processor 502, LLM response post-processor 504, user profile 506A, historical data 506B, application data 506C, and/or other data 506D. Additional features of LLM interface 500 may be present.

User profile 506A, historical data 506B, application data 506C, and/or other data 506D may influence the operation of LLM prompt pre-processor 502 and LLM response post-processor 504. Examples of content that may be stored for each of these items is discussed below.

User profile 506A may include user information descriptive of or relevant to the user interacting with LLM 510 via LLM interface 500. This information may be, for example, the user's name, age, email address, phone number, home address, preferred language, profile picture, brief biography, display preferences, privacy preferences, and so on. The information in user profile 506A can be useful when the intent of the user's implicit input is to send them an email or text messages. Software application 414 can be made to do so even if the user's email address or phone number was not present in the implicit input.

Historical data 506B may include information relating other implicit input received from the user (and/or other users) and the intents determined thereof. This may allow improvement to the operation of the operation of LLM prompt pre-processor 502 and LLM response post-processor 504, as they can personalize their output and more accurately determine intent based on historical data 506B. For instance, the user may request their favorite song to be played out in the implicit input. From historical data 506B, LLM prompt pre-processor 502 or LLM response post-processor 504 may be able to determine the title and artist of one or more frequently-requested songs as possible favorite songs.

Application data 506C may include an indication of software application 414 or a list of software applications with which the user is known to interact. With this information, LLM prompt pre-processor 502 and LLM response post-processor 504 may be able to generate more specific and precise output that is tailored for determining an intent relevant to such a software application. For example, if the user's implicit input involves an indication that the user wishes to read the news, LLM prompt pre-processor 502 or LLM response post-processor 504 may query application data 506C to determine which news applications are available to the user.

Other data 506D may be any type of data that might not be included in user profile 506A, historical data 506B, or application data 506C. This could include, for example, the user's calendar, the make and model of the user's mobile phone, the current time and date, and so on.

As noted, LLM interface 500 serves as a "wrapper" around LLM 510. In other words, representation of implicit input may be received by LLM prompt pre-processor 502. LLM prompt pre-processor 502 may generate an LLM prompt from the implicit input as well as information from one or more of user profile 506A, historical data 506B, application data 506C, and/or other data 506D. LLM prompt pre-processor 502 may transmit the LLM prompt to LLM 510. In turn, LLM 510 may perform NLP tasks to determine an LLM response to the LLM prompt. LLM 510 may provide this LLM response to LLM interface 500, which routes it to LLM response post-processor 504. LLM response post-processor 504 may modify, edit, and/or select words, tokens, or other items from the LLM response and provide it as the determined intent of the implicit input.

Notably, LLM interface 500 may operate on a client device (e.g., a desktop computer, laptop computer, smartphone, or tablet operated by the user who provided the implicit intent. Alternatively, LLM interface 500 may operate on a server device (e.g., a server device that hosts and/or executes software application 414). LLM 510 may be disposed on such a server device or within a remote cloud-based network accessible to the server device.

As discussed above, implicit input may take the form of text, images, audio, video, and/or sensor input. Other formats may be possible. For sake of simplicity, this discussion assumes that implicit input is textual or in image form. Further, this discussion also assumes that implicit input may include textual or other representations of information from non-textual modalities. For example, implicit input may represent location data and/or sensor data textually (e.g., "Location: latitude = 41.8781N, longitude = -87.6298W" or "Temperature: 26C").

LLM prompt pre-processor 502 may use at least part of the implicit input (possibly with additional input from one or more of user profile 506A, historical data 506B, application data 506C, and/or other data 506D) to generate the LLM prompt. This may include placing aspects of the implicit input into the form that is better suited for use as the LLM prompt. For example, if the implicit input when integrated with the additional input is "Where's that ice cream stand?; Location: latitude = 41.8781N, longitude = -87.6298W; Temperature: 26C", LLM prompt pre-processor 502 might generate the following LLM prompt: "Determine the intent of the following user input that includes a query, a location, and a temperature: 'Where's that ice cream stand?; Location: latitude = 41.8781N, longitude: -87.6298W; Temperature: 26C'". Here, LLM prompt pre-processor 502 has "wrapped" the implicit input in wording that is likely to cause LLM 510 to produce a more relevant and useful result.

Note that the temperature can be relevant to such a request as it indicates that it is hot at the location (26 degrees Celsius), given that some ice cream stands are not open when the temperature is cold. In other examples, LLM prompt pre-processor 502 may omit information that it deems to be irrelevant to determining the intent of the implicit input.

In general, LLM prompt pre-processor 502 may take implicit input X as a text string and produce the LLM prompt "Determine the intent of the following user input: X." As noted, LLM prompt pre-processor 502 may parse implicit input X to select or remove certain words, tokens, and/or phrases that are unlikely to be helpful during the processing of LLM 510 (e.g., removal of stop words and non-relevant characters, stemming and lemmatization of words to their root form, keyword extraction, normalization to lowercase, and/or content-specific filtering).

As noted, information from user profile 506A, historical data 506B, application data 506C, and/or other data 506D may be used to enhance the LLM prompt. For example, information Y from user profile 506A and information Z from application data 506C may be incorporated into an LLM prompt, such as "Determine the intent of the user input X, given user information Y and software application information Z, where this user is attempting to interact with this software application." Other possibilities exist.

Regardless, LLM prompt pre-processor 502 may provide an LLM prompt to LLM 510. Based on the ice cream stand LLM prompt for example, LLM 510 might produce the following LLM response "The user's intent appears to be to find the location of an ice cream stand. The provided latitude and longitude coordinates (41.8781N, -87.6298W) correspond to Chicago, suggesting that the user is in or referring to the Chicago area. The mention of the temperature, which is 26 degrees Celsius, could imply that the user is providing contextual information about the weather, possibly indicating that it is a warm day and hence a suitable time for ice cream." This output, however, is in natural language form and unwieldy for a computer to quickly and accurately process.

Instead, LLM prompt pre-processor 502 may provide a more specific LLM prompt to LLM 510, such as "Determine the intent of the following user input that includes a query, a location, and a temperature: 'Where's that ice cream stand?; Location: latitude = 41.8781N, longitude: -87.6298W; Temperature: 26C'. Provide a response in JSON format indicating a simplified and short description of the query, the location in GPS form, and the temperature in number form as separate elements of a JSON block." Based on this, LLM 510 might produce the following LLM response:

```
           {
            "query": "Locate ice cream stand",
            "location": {
             "latitude": 41.8781,
             "longitude": -87.6298
            },
            "temperature": 26
           }
```

Here, the JSON form of the LLM response is efficient for further parsing and processing, such as mapping the intent encoded therein to an action for software application 414. For example, LLM response post-processor 504 may determine that the values of the JSON elements "query" and "location" are the most relevant and provide them to intent-action mapping 412 as an intent. Software application 414 may be a navigation application and intent-action mapping 412 have an entry that associates such input to a navigation application action. For example, this action may cause software application 414 to display walking or driving directions to an ice cream stand nearest to the given GPS coordinates. Notably, forms other than JSON, such as XML, may be used instead for the LLM response.

Some embodiments may involve LLM response post-processor 504 providing at least part of the LLM response back to LLM prompt pre-processor 502. In this manner, a sequence of LLM prompts may be generated, each building upon the previous LLM response until the intent is sufficiently determined.

The following example further illustrates how the elements of Figure 5 might operate in order to determine a user's intent. Suppose that software application 414 is a video streaming application (e.g., for movies, television shows, documentaries, and so on) and that during a streaming session the user has made statements, such as "Why is it breaking up", "The video is choppy", and "Huh, it froze for a while." These utterances may be indications that can be used as implicit input. Such implicit input may be provided to LLM interface 500. LLM prompt pre-processor 502 may determine that user profile 506A indicates the location of the user's home, historical data 506B indicates that the user has never previously produced implicit input relating to the video streaming application, application data 506C may indicate the modes of operation of the video streaming application, and other data 506D may indicate that the user is not currently at home and the device that the user is currently using for the video streaming (e.g., an iPad).

Based on this information, LLM prompt pre-processor 502 may generate the following LLM prompt: "Determine the intent of the following user input relating to a video streaming application that is being used on the user's iPad: 'Why is it breaking up', 'The video is choppy', and 'Huh, it froze for a while.' Provide a response in JSON format indicating simplified and short descriptions of the user's intent and the most likely problem that the user is having in elements of a JSON block." This LLM prompt may be provided to LLM 510. LLM 510 may produce the following LLM response:

```
           {
            "intent": "Report and resolve video playback problems",
            "problem_description": "Intermittent video playback disruptions",
            "likely_problems": [
             "Unstable internet connection",
             "Application glitch",
             "iPad's processing limitations"
            ]
           }
```

This LLM response may be augmented by LLM response post-processor 504 (possibly with additional input from one or more of user profile 506A, historical data 506B, application data 506C, and/or other data 506D) to indicate the user's current location and the name of the video streaming application. The resulting intent may be provided to intent-action mapping 412, which may have entries mapping this intent to actions such as reducing the video resolution of the stream or offering to reboot the iPad.

In an alternative embodiment, the intent may be selected from a pre-determined plurality of intents. Doing so allows intents to be determined more precisely and in a programmatic fashion. As an example, LLM prompt pre-processor might generate as the LLM prompt: "Determine the intent of the following user input relating to a video streaming application that is being used on the user's iPad: 'Why is it breaking up', 'The video is choppy', and 'Huh, it froze for a while.' Provide a response in JSON format indicating simplified and short descriptions of the user's intent and the most likely problem that the user is having in elements of a JSON block. Select the intent from the following: low video quality, app crashes, audio-video sync issues, connectivity problems, battery drain, overheating touchscreen responsiveness, ad interruptions, account problems."

This LLM prompt may have been generated based on the implicit input as well as indications from the additional information that software application 414 is a video streaming application being used on an iPad. The LLM prompt may be provided to LLM 510. LLM 510 may produce the following LLM response:

```
           {
            "user_intent": "connectivity problems",
            "problem _description": "Video playback disruptions",
            "likely_causes": [
             "Intermittent or weak internet connection",
             "Server-side issues affecting video streaming",
             "Bandwidth limitations causing video to buffer or freeze"
            ]
           }
```

In this case, intent-action mapping 412 can be arranged to have entries with actions appropriate for each of the pre-determined plurality of intents.

In general, the techniques provided in the context of Figure 4 and Figure 5 may be employed to modify the functioning of various types of software applications in response to implicit user input. As noted, such implicit input may be textual, visual, or auditory, and the software applications may be modified to display a particular user interface screen, navigate through a workflow, enable or disable a feature, change the operation of a feature, and so on. Many other possibilities exist.

Moreover, in some cases a domain-specific LLM may be used instead of a general-purpose LLM. A domain-specific LLM may be tailored to understand, generate, and interpret language within a specific field or area of expertise, such as legal, medical, or information technology domains. These models are trained on datasets that are rich in the terminology, jargon, and stylistic nuances specific to their target domain. This focused training approach allows them to achieve higher accuracy and relevancy in tasks within their area of specialization, as they can better grasp the context and subtleties of domain-specific language. Execution of these domain-specific LLMs may require less computational resources (e.g., processor and/or memory utilization) than general-purpose LLMs.

### IV. Further Example Uses of LLM-Enhanced Implicit Input

The embodiments herein may have a vast number of additional uses with regard to modifying the behavior of software applications. Many such modifications are likely to be specific to a particular software application or class of software application. Nonetheless, the discussion below provides a few examples.

### A. Tradeoff of Benefits Provided Versus Delay or Frequency of Results

Many types of software applications can be tuned in various ways to trade off between the quality and/or completeness of the benefits they provide versus how long, how frequently, and/or the extent of computing resources used to provide their results.

As one example, a machine learning training application may require a large amount of time and computational resources to produce a model that provides highly accurate results. However, if the user supplies implicit input indicating that they are impatient, concerned with training delays, or unwilling to invest in the typically-required amount of computational resources, the machine learning training application (potentially with the user's consent) may select to train the model using a subset of the available training data (e.g., 50% rather than 100%) or for fewer training epochs before stopping (e.g., setting convergence thresholds so that the training process is likely to converge in fewer epochs). For instance, the user might state, "Wow, this training is going to take forever!" and the machine learning training application may take measures to speed up the training accordingly.

In another example, a health and fitness software application may be configured to notify its user several times a day to move about, engage in exercise, or eat healthy food. However, if the user supplies implicit input indicating that they are frustrated with these reminders, the health and fitness software application (potentially with the user's consent) may reduce the frequency of the reminders or turn them off completely. For instance, the user might state, "Why is this app sending me so many notifications?" and the health and fitness software application may take measures to reduce or eliminate its notifications.

### B. Responding to Environmental Conditions

Environmental conditions can be collected by way of audio, still image, video, temperature, location, and various other types of implicit input (e.g., using sensors). This information can modify the functioning of various software applications.

As one example, a software application may be configured to adapt to the weather conditions in the user's location. This may involve software application determining or being notified of weather conditions based on the user's GPS coordinates. Then, the software application may change its background image to reflect these conditions (e.g., displaying a background of a bright sun or of a cloud producing rain). By incorporating an LLM response, the software application may comment or advise the user based on these conditions. For instance, if rain is in the weather forecast, the software application may display text to the user or generate audio stating, "It looks like it will rain this afternoon, so you might want to bring a jacket if you go out." Alternatively, on a sunny day, the LLM response may state, "What a beautiful day! Make sure you don't spend it all in front of the computer!"

### C. Responding to User Emotion

As noted above, user emotion can be detected by way of implicit input from audio (e.g., voice), still images (e.g., facial expressions and/or gestures), and possibly other sources. Notably, users might express emotion toward a software application that provides information about the user's needs or preferences that would otherwise be unavailable. These software applications may be configured to respond to user expressions of happiness, sadness, anger, surprise, disgust, boredom, and/or fear. A software application may be configured to modify its behavior based on detected emotion of its user.

As one example, a software application that determines or is notified that a user may be expressing boredom might modify its color scheme to be brighter or to change periodically, or introduce an upbeat soundtrack. In another example, a software application that determines or is notified that a user may be expressing anger might provide a apology to the user, ask them to enter or utter a description of why they are angry, and/or ask them if they would like to view help or talk to a human customer support agent.

In response to detection of any negative emotion (e.g., sadness, anger, disgust, boredom, and/or fear) a software application may be configured to present the user with help or a tooltip (e.g., via a popup window or modal overlay) with the goal of improving the user's interaction with the software application. In some cases, this may involve the software application asking the user if they would like to view the help or tooltip before presenting it.

### D. Incorporating Information from User Profiles

Information from a user profile (e.g., user profile 506A) could be used to influence how an LLM prompt is crafted and/or how an LLM response is processed. A software application may record its interactions with users in their respective user profiles, building up an understanding of the user's preferences and past responses to software application behavior. This information can be used to personalize content and communication style, provide adaptive user interfaces, customize notifications, change the language(s) used to communicate with the user, and so on. In some cases, the user profile may be constructed based on the user's interaction with one software application and then used to influence how another software application interacts with the user.

### E. Using an LLM to Generate Contextual Feedback

Some software applications may benefit from engaging in conversation with a user, either via text (e.g., a chatbot) or an audio interface (e.g., spoken word). These conversations may be general or specific and may have the goal is addressing particular issues of concern to the user or just establishing a friendly rapport with the user. An LLM can facilitate such conversations.

As one example, a software application may be configured to attempt to generally engage with a user. The software application may provide the following LLM prompt to an LLM: "Produce a JSON array of five strings that a software application could make to a user in order to engage that user in conversation." The LLM response might include the following JSON array:

```
           [
            "What's been the highlight of your day so far?",
            "If you could add one feature to this app, what would it be?",
            "Do you have any feedback or suggestions for us? We're all ears!",
            "What's one thing you're looking forward to this week?",
            "How can we make your experience with our app even better?"
          ]
```

The structured nature of the JSON array allows it to be manipulated programmatically. For instance, the software application might randomly select one of these strings to display to the user.

In another example, the engagement might have a particular goal. For instance, a compiler or build script may have a function that reminds programmers of standard steps they should have taken to verify that their code is ready for submission. The software application may provide the following LLM prompt to an LLM: "Produce a JSON array of five strings that a build script could make to a programmer who is about to submit their code for inclusion in the main line of a product." The LLM response might include the following JSON array:

```
           [
            "Have you run all unit tests to ensure your code
meets our quality standards before merging?",
            "Please confirm that your code changes are
fully documented, including updates to the
            README or any relevant documentation.",
            "Can you verify that your code has been peer-reviewed
and approved according to our
            project's contribution guidelines?",
            "Ensure your code adheres to our coding standards
and style guide. Have you checked for
            any syntax or formatting issues?",
            "Did you update or add any necessary tests to cover
the new functionality or changes you're
            introducing?"
          ]
```

Again, the structured nature of the JSON array allows it to be manipulated programmatically. For instance, the build script might iterate through displaying each of these strings as queries and gather the respective responses from the user.

### V. Example Operations

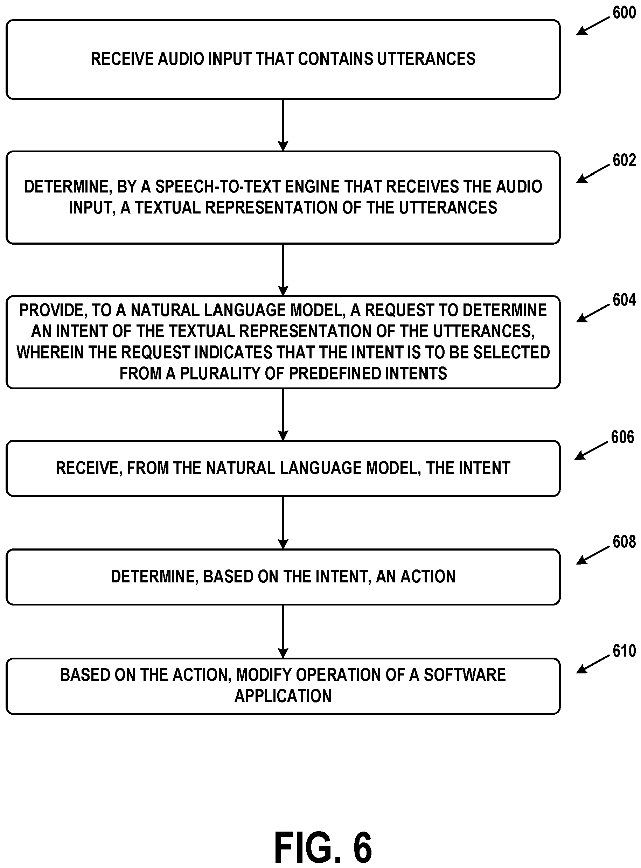

Figure 6 is a flow chart illustrating an example embodiment. The process illustrated by Figure 6 may be carried out by a computing device, such as computing device 100, and/or a cluster of computing devices, such as server cluster 200. However, the process can be carried out by other types of devices or device subsystems. For example, the process could be carried out by a portable computer, such as a laptop or a tablet device.

The embodiments of Figure 6 may be simplified by the removal of any one or more of the features shown therein. Further, these embodiments may be combined with features, aspects, and/or implementations of any of the previous figures or otherwise described herein.

Block 600 may involve receiving audio input that contains utterances.

Block 602 may involve determining, by a speech-to-text engine that receives the audio input, a textual representation of the utterances.

Block 604 may involve providing, to a natural language model, a request to determine an intent of the textual representation of the utterances, wherein the request indicates that the intent is to be selected from a plurality of predefined intents.

Block 606 may involve receiving, from the natural language model, the intent.

Block 608 may involve determining, based on the intent, an action.

Block 610 may involve, based on the action, modifying operation of a software application.

In some examples, the audio input is received by way of a microphone that is positioned so that, when activated, it detects the utterances, wherein a user associated with the microphone has opted-in to sharing the audio input.

Some examples may further involve receiving a digital image; providing, to the natural language model or an image analysis model, a second request to identify objects within the digital image; and receiving, from the natural language model or the image analysis model, a list of identified objects within the digital image, wherein the action is also determined based on the identified objects.

In some examples, the second request indicates that, for any of the objects that are identified as human faces, the human faces are to be associated with one or more emotions detected therein, wherein the action is also determined based on the one or more emotions.

Some examples may further involve receiving a representation of a location, wherein the request also includes an indication of the location, wherein the action is also determined based on the location.

Some examples may further involve receiving a representation of a sensor data, wherein the request also includes an indication of the sensor data, wherein the action is also determined based on the sensor data.

In some examples, the natural language model comprises a neural network architecture including: a plurality of transformer layers, each layer with a self-attention mechanism and a position-wise feed-forward network, an input layer configured to receive and tokenize natural language phrases into input tokens, an embedding mechanism to map input tokens to vectors in a multi-dimensional space, and an output layer configured to transform the vectors as processed from a final transformer layer into natural language text.

Some examples may further involve providing, to a prompt pre-processor, the textual representation of the utterances; modifying, by the prompt pre-processor, the textual representation of the utterances into the natural language model prompt; and providing, to the natural language model, the natural language model prompt.

In some examples, receiving the intent comprises: receiving, from the natural language model, a natural language model response containing a representation of the intent; and parsing natural language model response to obtain the intent.

In some examples, modifying the textual representation of the utterances is based on one or more of a user profile, historical data, or application data.

In some examples, determining the action comprises searching an intent-action mapping data structure for an entry including the intent; and reading the action from the entry.

In some examples, functionality of the software application is modified to provide visual or auditory assistance to a user, display a particular user interface screen, navigate through a workflow, enable or disable a feature, or change operation of the feature.

In some examples, functionality of the software application is modified to increase or decrease speed at which the software application executes one or more particular tasks or produces one or more particular events.

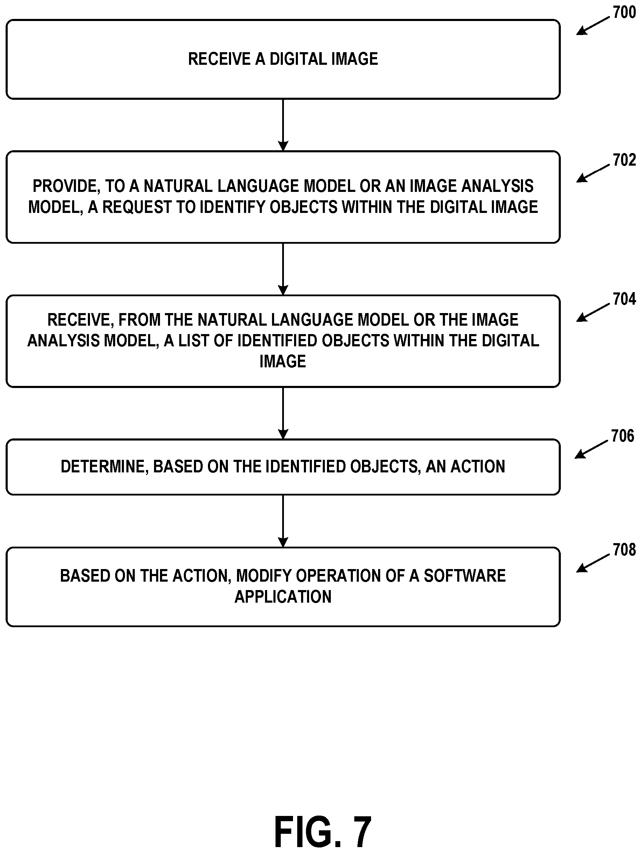

Figure 7 is a flow chart illustrating an example embodiment. The process illustrated by Figure 7 may be carried out by a computing device, such as computing device 100, and/or a cluster of computing devices, such as server cluster 200. However, the process can be carried out by other types of devices or device subsystems. For example, the process could be carried out by a portable computer, such as a laptop or a tablet device.

The embodiments of Figure 7 may be simplified by the removal of any one or more of the features shown therein. Further, these embodiments may be combined with features, aspects, and/or implementations of any of the previous figures or otherwise described herein.

Block 700 may involve receiving a digital image.

Block 702 may involve providing, to a natural language model or an image analysis model, a request to identify objects within the digital image.

Block 704 may involve receiving, from the natural language model or the image analysis model, a list of identified objects within the digital image.

Block 706 may involve determining, based on the identified objects, an action.

Block 708 may involve based on the action, modifying operation of a software application.

### VI. Example Technical Improvements

These embodiments provide a technical solution to a technical problem. One technical problem being solved is the use of implicit input to modify the operation of a software application. In practice, this solution is advantageous because implicit input contains information regarding the software application that can be computationally burdensome - if possible at all - to obtain from explicit input.

In the prior art, implicit input was not used in this fashion or at all. Thus, prior art software applications were not equipped to process such implicit input and/or are unable to interpret such input in an accurate, efficient, and meaningful fashion. Instead, these software applications required complex sequences of explicit input to modify their functionality. Such sequences result in more computational resources (e.g., processor, memory, and/or network capacity) being required for input and output processing, and there still is no guarantee that explicit input can represent the same context or perform the same functions as implicit input. Thus, prior art techniques did little if anything to address the accurate and efficient interpretation and use of implicit input.

The embodiments herein overcome these limitations by employing various types of machine learning models to determine the semantic meaning of implicit input. In this manner, the determined sematic meaning of one or more units of implicit input may then be used to modify the functionality of a software application. This results in several advantages. First, computational resources are no longer wasted in lengthy or futile attempts to modify software functionality solely with explicit input. Second, these embodiments can be used to offload the processing and memory requirements from client devices and/or application-specific software on server devices onto remote computing platforms that can more readily be scaled to efficiently operate machine learning models. Third, the use of implicit input can result in a software application performing in a more accurate fashion - for instance, the software application may be able to obtain an interpretation of the intent of user input that reduces errors and/or misunderstandings thereof.

Other technical improvements may also flow from these embodiments, and other technical problems may be solved. Thus, this statement of technical improvements is not limiting and instead constitutes examples of advantages that can be realized from the embodiments.

### VII. Additional Embodiments

Implementations of the present disclosure may relate to one or more of the enumerated clauses listed below.

(A1) A computing system comprising: one or more processors; and memory storing instructions that are executable by the one or more processors to perform operations comprising: receiving audio input that contains utterances; determining, by a speech-to-text engine that receives the audio input, a textual representation of the utterances; providing, to a natural language model, a request to determine an intent of the textual representation of the utterances, wherein the request indicates that the intent is to be selected from a plurality of predefined intents; receiving, from the natural language model, the intent; determining, based on the intent, an action; and based on the action, modifying operation of a software application.

(A2) The computing system of any one or more previous clauses, wherein the audio input is received by way of a microphone that is positioned so that, when activated, it detects the utterances, and wherein a user associated with the microphone has opted-in to sharing the audio input.

(A3) The computing system of any one or more previous clauses, the operations further comprising: receiving a digital image; providing, to the natural language model or an image analysis model, a second request to identify objects within the digital image; and receiving, from the natural language model or the image analysis model, a list of identified objects within the digital image, wherein the action is also determined based on the identified objects.

(A4) The computing system of any one or more previous clauses, wherein the second request indicates that, for any of the objects that are identified as human faces, the human faces are to be associated with one or more emotions detected therein, wherein the action is also determined based on the one or more emotions.

(A5) The computing system of any one or more previous clauses, the operations further comprising: receiving a representation of a location, wherein the request also includes an indication of the location, and wherein the action is also determined based on the location.

(A6) The computing system of any one or more previous clauses, the operations further comprising: receiving a representation of a sensor data, wherein the request also includes an indication of the sensor data, and wherein the action is also determined based on the sensor data.

(A7) The computing system of any one or more previous clauses, wherein the natural language model comprises a neural network architecture including: a plurality of transformer layers, each layer with a self-attention mechanism and a position-wise feed-forward network, an input layer configured to receive and tokenize natural language phrases into input tokens, an embedding mechanism to map input tokens to vectors in a multi-dimensional space, and an output layer configured to transform the vectors as processed from a final transformer layer into natural language text.

(A8) The computing system of any one or more previous clauses, wherein providing the request comprises: providing, to a prompt pre-processor, the textual representation of the utterances; modifying, by the prompt pre-processor, the textual representation of the utterances into the natural language model prompt; and providing, to the natural language model, the natural language model prompt.

(A9) The computing system of any one or more previous clauses, wherein receiving the intent comprises: receiving, from the natural language model, a natural language model response containing a representation of the intent; and parsing natural language model response to obtain the intent.

(A10) The computing system of any one or more previous clauses, wherein modifying the textual representation of the utterances is based on one or more of a user profile, historical data, or application data.

(A11) The computing system of any one or more previous clauses, wherein determining the action comprises: searching an intent-action mapping data structure for an entry including the intent; and reading the action from the entry.

(A12) The computing system of any one or more previous clauses, wherein functionality of the software application is modified to provide visual or auditory assistance to a user, display a particular user interface screen, navigate through a workflow, enable or disable a feature, or change operation of the feature.

(A13) The computing system of any one or more previous clauses, wherein functionality of the software application is modified to increase or decrease speed at which the software application executes one or more particular tasks or produces one or more particular events.

(A14) A computing system comprising: one or more processors; and memory storing instructions that are executable by the one or more processors to perform operations comprising: receiving a digital image; providing, to a natural language model or an image analysis model, a request to identify objects within the digital image; receiving, from the natural language model or the image analysis model, a list of identified objects within the digital image; determining, based on the identified objects, an action; and based on the action, modifying operation of a software application.

(A15) The computing system of clause A14 combined with the features, functionality, or aspects of any one or more previous clauses.

(A16) A computer-readable medium encoding program instructions that, when executed by one or more processors of a computing system, cause the computing system to perform operations of any one or more previous clauses.

(A17) A computer-implemented method comprising operations of any one or more previous clauses.

(A18) Means for a system to perform operations of any one or more previous clauses.

Thus, from one perspective, there has now been described an implementation which involces receiving audio input that contains utterances; determining, by a speech-to-text engine that receives the audio input, a textual representation of the utterances; providing, to a natural language model, a request to determine an intent of the textual representation of the utterances, wherein the request indicates that the intent is to be selected from a plurality of predefined intents; receiving, from the natural language model, the intent; determining, based on the intent, an action; and based on the action, modifying operation of a software application.

### VIII. Closing

The present disclosure is not to be limited in terms of the particular embodiments described in this application, which are intended as illustrations of various aspects. Many modifications and variations can be made without departing from its scope, as will be apparent to those skilled in the art. Functionally equivalent methods and apparatuses within the scope of the disclosure, in addition to those described herein, will be apparent to those skilled in the art from the foregoing descriptions. Such modifications and variations are intended to fall within the scope of the appended claims.

The above detailed description describes various features and operations of the disclosed systems, devices, and methods with reference to the accompanying figures. The example embodiments described herein and in the figures are not meant to be limiting. Other embodiments can be utilized, and other changes can be made, without departing from the scope of the subject matter presented herein. It will be readily understood that the aspects of the present disclosure, as generally described herein, and illustrated in the figures, can be arranged, substituted, combined, separated, and designed in a wide variety of different configurations.

With respect to any or all of the message flow diagrams, scenarios, and flow charts in the figures and as discussed herein, each step, block, and/or communication can represent a processing of information and/or a transmission of information in accordance with example embodiments. Alternative embodiments are included within the scope of these example embodiments. In these alternative embodiments, for example, operations described as steps, blocks, transmissions, communications, requests, responses, and/or messages can be executed out of order from that shown or discussed, including substantially concurrently or in reverse order, depending on the functionality involved. Further, more or fewer blocks and/or operations can be used with any of the message flow diagrams, scenarios, and flow charts discussed herein, and these message flow diagrams, scenarios, and flow charts can be combined with one another, in part or in whole.

A step or block that represents a processing of information can correspond to circuitry that can be configured to perform the specific logical functions of a herein-described method or technique. Alternatively or additionally, a step or block that represents a processing of information can correspond to a module, a segment, or a portion of program code (including related data). The program code can include one or more instructions executable by a processor for implementing specific logical operations or actions in the method or technique. The program code and/or related data can be stored on any type of computer readable medium such as a storage device including RAM, a disk drive, a solid-state drive, or another storage medium.

The computer readable medium can also include non-transitory computer readable media such as non-transitory computer readable media that store data for short periods of time like register memory and processor cache. The non-transitory computer readable media can further include non-transitory computer readable media that store program code and/or data for longer periods of time. Thus, the non-transitory computer readable media may include secondary or persistent long-term storage, like ROM, optical or magnetic disks, solid-state drives, or compact disc read only memory (CD-ROM), for example. The non-transitory computer readable media can also be any other volatile or non-volatile storage systems. A non-transitory computer readable medium can be considered a computer readable storage medium, for example, or a tangible storage device. Additionally, or alternatively, a computer-readable medium can include transient media such as carrier waves and transmission media.

Moreover, a step or block that represents one or more information transmissions can correspond to information transmissions between software and/or hardware modules in the same physical device. However, other information transmissions can be between software modules and/or hardware modules in different physical devices.

The particular arrangements shown in the figures should not be viewed as limiting. It should be understood that other embodiments could include more or less of each element shown in a given figure. Further, some of the illustrated elements can be combined or omitted. Yet further, an example embodiment can include elements that are not illustrated in the figures.

While various aspects and embodiments have been disclosed herein, other aspects and embodiments will be apparent to those skilled in the art. The various aspects and embodiments disclosed herein are for purpose of illustration and are not intended to be limiting, with the true scope being indicated by the following claims.

Further examples of feature combinations taught by the present disclosure are set out in the following numbered clauses:
1. A computing system comprising:
   one or more processors; and
   memory storing instructions that are executable by the one or more processors to perform operations comprising:
      receiving audio input that contains utterances;
      determining, by a speech-to-text engine that receives the audio input, a textual representation of the utterances;
      providing, to a natural language model, a request to determine an intent of the textual representation of the utterances, wherein the request indicates that the intent is to be selected from a plurality of predefined intents;
      receiving, from the natural language model, the intent;
      determining, based on the intent, an action; and
      based on the action, modifying operation of a software application.
2. The computing system of clause 1, wherein the audio input is received by way of a microphone that is positioned so that, when activated, it detects the utterances, and wherein a user associated with the microphone has opted-in to sharing the audio input.
3. The computing system of clause 1 or clause 2, the operations further comprising:
   receiving a digital image;
   providing, to the natural language model or an image analysis model, a second request to identify objects within the digital image; and
   receiving, from the natural language model or the image analysis model, a list of identified objects within the digital image, wherein the action is also determined based on the identified objects.
4. The computing system of clause 3, wherein the second request indicates that, for any of the objects that are identified as human faces, the human faces are to be associated with one or more emotions detected therein, wherein the action is also determined based on the one or more emotions.
5. The computing system of any preceding clause, the operations further comprising:
   receiving a representation of a location, wherein the request also includes an indication of the location, and wherein the action is also determined based on the location.
6. The computing system of any preceding clause, the operations further comprising:
   receiving a representation of a sensor data, wherein the request also includes an indication of the sensor data, and wherein the action is also determined based on the sensor data.
7. The computing system of any preceding clause, wherein the natural language model comprises a neural network architecture including: a plurality of transformer layers, each layer with a self-attention mechanism and a position-wise feed-forward network, an input layer configured to receive and tokenize natural language phrases into input tokens, an embedding mechanism to map input tokens to vectors in a multi-dimensional space, and an output layer configured to transform the vectors as processed from a final transformer layer into natural language text.
8. The computing system of any preceding clause, wherein providing the request comprises:
   providing, to a prompt pre-processor, the textual representation of the utterances;
   modifying, by the prompt pre-processor, the textual representation of the utterances into the natural language model prompt; and
   providing, to the natural language model, the natural language model prompt.
9. The computing system of clause 8, wherein receiving the intent comprises:
   receiving, from the natural language model, a natural language model response containing a representation of the intent; and
   parsing natural language model response to obtain the intent.
10. The computing system of clause 8 or clause 9, wherein modifying the textual representation of the utterances is based on one or more of a user profile, historical data, or application data.
11. The computing system of any preceding clause, wherein determining the action comprises:
   searching an intent-action mapping data structure for an entry including the intent; and
   reading the action from the entry.
12. The computing system of any preceding clause, wherein functionality of the software application is modified to provide visual or auditory assistance to a user, display a particular user interface screen, navigate through a workflow, enable or disable a feature, or change operation of the feature.
13. The computing system of any preceding clause, wherein functionality of the software application is modified to increase or decrease speed at which the software application executes one or more particular tasks or produces one or more particular events.
14. A computing system comprising:
   one or more processors; and
   memory storing instructions that are executable by the one or more processors to perform operations comprising:
      receiving a digital image;
      providing, to a natural language model or an image analysis model, a request to identify objects within the digital image;
      receiving, from the natural language model or the image analysis model, a list of identified objects within the digital image;
      determining, based on the identified objects, an action; and
      based on the action, modifying operation of a software application.
15. A computer-readable medium encoding program instructions that, when executed by one or more processors of a computing system, cause the computing system to perform operations comprising:
   receiving audio input that contains utterances;
   determining, by a speech-to-text engine that receives the audio input, a textual representation of the utterances;
   providing, to a natural language model, a request to determine an intent of the textual representation of the utterances, wherein the request indicates that the intent is to be selected from a plurality of predefined intents;
   receiving, from the natural language model, the intent;
   determining, based on the intent, an action; and
   based on the action, modifying operation of a software application.
16. The computer-readable medium of clause 15, the operations further comprising:
   receiving a digital image;
   providing, to the natural language model or an image analysis model, a second request to identify objects within the digital image; and
   receiving, from the natural language model or the image analysis model, a list of identified objects within the digital image, wherein the action is also determined based on the identified objects.
17. The computer-readable medium of clause 15 or clause 16, wherein providing the request comprises:
   providing, to a prompt pre-processor, the textual representation of the utterances;
   modifying, by the prompt pre-processor, the textual representation of the utterances into the natural language model prompt; and
   providing, to the natural language model, the natural language model prompt.
18. The computer-readable medium of clause 17, wherein receiving the intent comprises:
   receiving, from the natural language model, a natural language model response containing a representation of the intent; and
   parsing natural language model response to obtain the intent.
19. The computer-readable medium of any of clauses 15 to 18, wherein determining the action comprises:
   searching an intent-action mapping data structure for an entry including the intent; and
   reading the action from the entry.
20. The computer-readable medium of any of clauses 15 to 19, wherein functionality of the software application is modified to increase or decrease speed at which the software application executes one or more particular tasks or produces one or more particular events.

## Claims

1. A computer-implemented method comprising:
receiving audio input that contains utterances;
determining, by a speech-to-text engine that receives the audio input, a textual representation of the utterances;
providing, to a natural language model, a request to determine an intent of the textual representation of the utterances, wherein the request indicates that the intent is to be selected from a plurality of predefined intents;
receiving, from the natural language model, the intent;
determining, based on the intent, an action; and
based on the action, modifying operation of a software application.

2. The computer-implemented method of claim 1, wherein the audio input is received by way of a microphone that is positioned so that, when activated, it detects the utterances, and wherein a user associated with the microphone has opted-in to sharing the audio input.

3. The computer-implemented method of any one of claims 1-2, further comprising:
receiving a digital image;
providing, to the natural language model or an image analysis model, a second request to identify objects within the digital image; and
receiving, from the natural language model or the image analysis model, a list of identified objects within the digital image, wherein the action is also determined based on the identified objects.

4. The computer-implemented method of claim 3, wherein the second request indicates that, for any of the objects that are identified as human faces, the human faces are to be associated with one or more emotions detected therein, wherein the action is also determined based on the one or more emotions.

5. The computer-implemented method of any one of claims 1-4, further comprising:
receiving a representation of a location, wherein the request also includes an indication of the location, and wherein the action is also determined based on the location.

6. The computer-implemented method of any one of claims 1-5, further comprising:
receiving a representation of a sensor data, wherein the request also includes an indication of the sensor data, and wherein the action is also determined based on the sensor data.

7. The computer-implemented method of any one of claims 1-6, wherein the natural language model comprises a neural network architecture including: a plurality of transformer layers, each layer with a self-attention mechanism and a position-wise feed-forward network, an input layer configured to receive and tokenize natural language phrases into input tokens, an embedding mechanism to map input tokens to vectors in a multi-dimensional space, and an output layer configured to transform the vectors as processed from a final transformer layer into natural language text.

8. The computer-implemented method of any one of claims 1-7, wherein providing the request comprises:
providing, to a prompt pre-processor, the textual representation of the utterances;
modifying, by the prompt pre-processor, the textual representation of the utterances into the natural language model prompt; and
providing, to the natural language model, the natural language model prompt.

9. The computer-implemented method of claim 8,
wherein receiving the intent comprises receiving, from the natural language model, a natural language model response containing a representation of the intent, and parsing natural language model response to obtain the intent;
or wherein modifying the textual representation of the utterances is based on one or more of a user profile, historical data, or application data.

10. The computer-implemented method of any one of claims 1-9, wherein determining the action comprises:
searching an intent-action mapping data structure for an entry including the intent; and
reading the action from the entry.

11. The computer-implemented method of any one of claims 1-10, wherein functionality of the software application is modified to provide visual or auditory assistance to a user, display a particular user interface screen, navigate through a workflow, enable or disable a feature, or change operation of the feature.

12. The computer-implemented method of any one of claims 1-11, wherein functionality of the software application is modified to increase or decrease speed at which the software application executes one or more particular tasks or produces one or more particular events.

13. A computer-implemented method comprising:
receiving a digital image;
providing, to a natural language model or an image analysis model, a request to identify objects within the digital image;
receiving, from the natural language model or the image analysis model, a list of identified objects within the digital image;
determining, based on the identified objects, an action; and
based on the action, modifying operation of a software application.

14. A computer-readable medium encoding program instructions that, when executed by one or more processors of a computing system, cause the computing system to perform the operations of any one of claims 1-13.

15. A computing system comprising:
one or more processors; and
memory storing instructions that are executable by the one or more processors to perform operations of any one of claims 1-13.
